(19) Europäisches Patentamt
European Patent Office
Office européen des brevets

(11) **EP 2 742 259 B1**

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(51) Int Cl.:
*F16H 3/66* *(2006.01)*    *B60K 6/485* *(2007.10)*
*F16H 3/12* *(2006.01)*

(21) Anmeldenummer: **12733474.6**

(22) Anmeldetag: **05.07.2012**

(86) Internationale Anmeldenummer:
**PCT/EP2012/063118**

(87) Internationale Veröffentlichungsnummer:
**WO 2013/020759 (14.02.2013 Gazette 2013/07)**

(54) **GETRIEBEVORRICHTUNG MIT MEHREREN SCHALTELEMENTEN**

TRANSMISSION DEVICE HAVING A PLURALITY OF SHIFT ELEMENTS

DISPOSITIF DE BOÎTE DE VITESSES COMPORTANT PLUSIEURS ÉLÉMENTS DE CHANGEMENT DE RAPPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2011 DE 102011080677**

(43) Veröffentlichungstag der Anmeldung:
**18.06.2014 Patentblatt 2014/25**

(73) Patentinhaber: **ZF Friedrichshafen AG**
**88046 Friedrichshafen (DE)**

(72) Erfinder:
• **GRIESMEIER, Uwe**
**88677 Markdorf (DE)**
• **KALTENBACH, Johannes**
**88048 Friedrichshafen (DE)**
• **SIBLA, Christian**
**88045 Friedrichshafen (DE)**
• **BECK, Stefan**
**88097 Eriskirch (DE)**

(56) Entgegenhaltungen:
**EP-A2- 1 504 946        EP-A2- 2 182 250**
**DE-A1-102008 032 320    JP-A- 9 257 121**
**US-A1- 2009 186 735**

EP 2 742 259 B1

**Beschreibung**

Die Erfindung betrifft eine Getriebevorrichtung mit mehreren Schaltelementen.

Eine als mehrgängiges Planetenkoppelgetriebe ausgeführte Getriebevorrichtung mit mehreren Planetenradsätzen und mehreren Schaltelementen ist aus der DE 10 2007 005 438 A1 bekannt. In Abhängigkeit einer Betätigung der Schaltelemente sind verschiedene Übersetzungen darstellbar. Es ist wenigstens eine elektrische Maschine vorgesehen, die mit einem der Planetenradsätze in Wirkverbindung steht. Von der elektrischen Maschine ist über eine Welle des ihr zugeordneten Planetenradsatzes ein Drehmoment in den Planetenradsatz einleitbar, um ein an einer weiteren Welle an dem zugeordneten Planetenradsatz anliegendes Drehmoment zur Darstellung einer Übersetzung in dem Planetenkoppelgetriebe über die elektrische Maschine abstützen zu können.

Die elektrische Maschine ersetzt ein vorzugsweise reibschlüssig ausgeführtes Lastschaltelement eines herkömmlichen Planetenkoppelgetriebes, wobei mittels der elektrischen Maschine neben Getriebefunktionen, wie Lastschaltungen, verschleißfreie Anfahrvorgänge und dergleichen, auch diverse Hybridfunktionen, wie elektrodynamische, verlustreduzierte Anfahrvorgänge, Nutzbremsungen usw., durchführbar sind. Die mit der elektrischen Maschine darstellbaren Hybridfunktionen sind dabei von den Eigenschaften des Radsatzes sowie der Leistungsklasse der elektrischen Maschine abhängig.

Des Weiteren ist ein solches mehrgängiges Planetenkoppelgetriebe in verschiedenen Ausbaustufen ausführbar, wobei ein mit dem mehrgängigen Planetenkoppelgetriebe ausgeführter Antriebsstrang eines Fahrzeuges ohne ein Anfahrelement, wie einen hydrodynamischen Drehmomentwandler oder eine reibschlüssige Anfahrkupplung, ausführbar ist. Zusätzlich ist ein mehrgängiges Planetenkoppelgetriebe, welches an der Stelle eines Schaltelementes mit einer elektrischen Maschine ausgeführt ist, anstatt mit reibschlüssigen Schaltelementen mit formschlüssigen Schaltelementen sowie einer auf die Schmierölversorgung des Radsatzes reduzierten Hydraulik ausbildbar.

Nachteilig dabei ist jedoch, dass das Planetenkoppelgetriebe zur Darstellung eines Start-Stopp-Betriebes für eine mit dem Planetenkoppelgetriebe in Wirkverbindung bringbare Brennkraftmaschine mit einer weiteren elektrischen Maschine auszubilden ist, was jedoch ein Fahrzeuggesamtgewicht erhöht und Herstellkosten sowie einen Bauraumbedarf des Planetenkoppelgetriebes in unerwünschtem Umfang vergrößert.

Der vorliegenden Erfindung liegt daher die Aufgabe zugrunde, eine kosten- und bauraumgünstige Getriebevorrichtung zur Verfügung zu stellen, mittels welcher ein Fahrzeug mit hohem Wirkungsgrad betreibbar ist und Übersetzungswechsel möglichst zugkraftunterbrechungsfrei durchführbar sind.

Erfindungsgemäß wird diese Aufgabe mit einer Getriebevorrichtung mit den Merkmalen des Patentanspruches 1 gelöst.

Die erfindungsgemäße Getriebevorrichtung umfasst mehrere Schaltelemente, die zur Darstellung verschiedener Übersetzungen in einen geschlossenen oder einen geöffneten Betriebszustand zu führen sind. Eine Antriebsmaschine ist mit wenigstens einer Welle und eine elektrische Maschine mit wenigstens einer weiteren Welle der Getriebevorrichtung koppelbar, während ein Abtrieb eines Fahrzeuges mit einer zusätzlichen Welle der Getriebevorrichtung in Wirkverbindung bringbar ist.

Erfindungsgemäß stehen die Welle, die wenigstens eine weitere Welle und die zusätzliche Welle während eines wenigstens annähernd zugkraftunterbrechungsfreien Übersetzungswechsel ausgehend von einer aktuell eingelegten Ist-Übersetzung in Richtung einer angeforderten Ziel-Übersetzung durch die am Übersetzungswechsel beteiligten Schaltelemente derart miteinander in Wirkverbindung, dass die Drehzahl der wenigstens einen mit der elektrischen Maschine verbindbaren weiteren Welle bei Anlegen nur eines Drehmomentes der elektrischen Maschine an der zusätzlichen Welle einem Produkt aus der Übersetzung zwischen der weiteren Welle und der zusätzlichen Welle und der Drehzahl der zusätzlichen Welle und bei Anlegen eines Drehmomentes der Antriebsmaschine und eines Drehmomentes der elektrischen Maschine an der zusätzlichen Welle einer Summe aus dem Produkt der Drehzahlwelle und einer ersten Variablen, die gleich einem negativen Quotienten aus dem von der elektrischen Maschine eingeleiteten Drehmoment und einem von der Verbrennungsmaschine eingeleiteten Drehmoment ist, und dem Produkt aus der Drehzahl der zusätzlichen Welle und einer zweiten Variablen entspricht, die gleich einem Produkt aus der Übersetzung zwischen der Welle und der zusätzlichen Welle und der ersten Variablen ist.

Der Aufbau der erfindungsgemäßen Getriebevorrichtung ist derart, dass eine im Bereich wenigstens einer weiteren Welle der Getriebevorrichtung angebundene elektrische Maschine während allen Übersetzungswechseln in der Getriebevorrichtung die Zugkraft im Bereich des Abtriebs erhalten kann. Im Idealfall ist die Getriebevorrichtung ohne Schleppverluste in geöffnetem Betriebszustand verursachende Reibschaltelemente und auch ohne Synchronisierungen ausgebildet. Das bedeutet, dass dann alle Schaltelemente der Getriebevorrichtung als formschlüssige Schaltelemente bzw. als Klauenschaltelemente ausgebildet sind.

Die elektrische Maschine wird erfindungsgemäß derart in die Getriebevorrichtung integriert bzw. an diese angebunden, dass für jede in der Getriebevorrichtung durchgeführte Schaltung bzw. für jeden Übersetzungswechsel die Anforderung erfüllt ist, dass mit den am Übersetzungswechsel beteiligten Schaltelementen die Drehzahl der mit der elektrischen Maschine verbundenen Welle der Getriebevorrichtung gleich dem Produkt aus der Übersetzung zwischen der weiteren Welle und der zusätzlichen Welle und der Drehzahl der zusätzlichen Welle oder der Summe aus dem Produkt der Drehzahl der Welle und der ersten Variablen und dem Produkt aus der Drehzahl der zusätzlichen Welle und der zweiten Variablen entspricht. Dabei sind vorliegend die an der Schaltung beteiligten Schaltelemente jene Schaltelemente, die während der Schaltung geschlossen sind und die Schnittmenge aus der Menge der bei eingelegter Ist-Übersetzung geschlossenen Schaltelemente mit der Menge der bei eingelegter Ziel-Übersetzung geschlossenen Schaltelemente bilden.

Bei entsprechender Wahl der Getriebestruktur ist diese Bedingung von einer einzigen Welle der Getriebevorrichtung während aller Übersetzungswechsel in der Getriebevorrichtung erfüllbar. In manchen Fällen ist es nötig oder sogar vorteilhaft, die elektrische Maschine in Abhängigkeit der jeweils angeforderten Schaltung mit verschiedenen weiteren Wellen der Getriebevorrichtung zu verbinden.

Angeforderte Übersetzungswechsel werden in der erfindungsgemäßen Getriebevorrichtung entweder als so genannte abtriebsgestützte oder als so genannte EDA-Schaltungen durchgeführt.

Während abtriebsgestützten Schaltungen in der Getriebevorrichtung wirkt die mit der Getriebevorrichtung koppelbare elektrische Maschine über eine definierte Übersetzung fest auf die zusätzliche Welle und somit auf den Abtrieb eines Fahrzeuges. Somit wird während abtriebsgestützten Schaltungen jeweils nur von der elektrischen Maschine am Abtrieb ein Drehmoment angelegt. Stellt ein angeforderter Übersetzungswechsel eine abtriebsgestützte Schaltung dar, ist die Drehzahl der Antriebsmaschine unabhängig vom Betriebszustand der elektrischen Maschine in Richtung der Drehzahl der einzulegenden Ziel-Übersetzung führbar.

Eine Getriebevorrichtung, die derartige abtriebsgestützte Schaltungen ermöglicht, ist aus der US 2009/0186735 A1 bekannt. Im Unterschied dazu liegt während EDA-Schaltungen, während welchen die elektrische Maschine wie ein elektrodynamisches Anfahrelement wirkt, sowohl ein Drehmoment der Antriebsmaschine als auch ein Drehmoment der elektrischen Maschine am Abtrieb bzw. an der damit koppelbaren zusätzlichen Welle der Getriebevorrichtung an, wobei ein Antriebsmoment der Antriebsmaschine zusätzlich im Bereich der elektrischen Maschine abgestützt wird. Dabei besteht dann die Möglichkeit, die Drehzahlen in der Getriebevorrichtung für das im Wesentlichen lastfreie Einlegen der Ziel-Übersetzung in im Wesentlichen synchronem Betriebszustand des oder der zu schließenden sowie des oder der zu öffnenden Schaltelemente durch stufenloses Einstellen der Drehzahl der Antriebsmaschine entsprechend vorzubereiten und anschließend die Ziel-Übersetzung in der Getriebevorrichtung einzulegen.

Eine Getriebevorrichtung, die derartige EDA-Schaltungen ermöglicht, ist aus der EP 2 182 250 A2 bekannt. Grundsätzlich sind bei eingelegter Übersetzung in der Getriebevorrichtung über diese in Verbindung mit einer vorzugsweise als Brennkraftmaschine ausgeführten Antriebsmaschine und einer zusätzlich mit der Getriebevorrichtung wirkverbundenen elektrischen Maschine alle gängigen Hybridfunktionen darstellbar, wobei die erfindungsgemäße Getriebevorrichtung im Vergleich zu an sich bekannten Lastschaltgetrieben mit Reibschaltelementen einen erheblich verbesserten Wirkungsgrad aufweist.

Dabei sind in einem mit der erfindungsgemäßen Getriebevorrichtung ausgeführten Fahrzeug mit einer mit der Getriebevorrichtung gekoppelten Antriebsmaschine und einer damit wirkverbundenen elektrischen Maschine ein Boost-Betriebszustand, ein Rekuperations-Betriebszustand, eine Verschiebung eines Betriebspunktes der Antriebsmaschine, ein rein elektrischer Fahrbetrieb, während dem ein am Abtrieb anliegendes Antriebsmoment allein über die elektrische Maschine zur Verfügung gestellt wird, sowie ein Starten der als Brennkraftmaschine ausgeführten Antriebsmaschine und ein Laden eines der elektrischen Maschine zugeordneten elektrischen Speichers auf einfache und kostengünstige sowie in bauraumgünstiger Art und Weise realisierbar.

Sowohl die in den Patentansprüchen angegebenen Merkmale als auch die im nachfolgenden Ausführungsbeispiel der erfindungsgemäßen Getriebevorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:

Fig. 1 eine stark schematisierte Darstellung eines Fahrzeugantriebsstranges mit einem Ausführungsbeispiel der erfindungsgemäßen Getriebevorrichtung; und

Fig. 2 eine Schaltmatrix der Getriebevorrichtung gemäß Fig. 1.

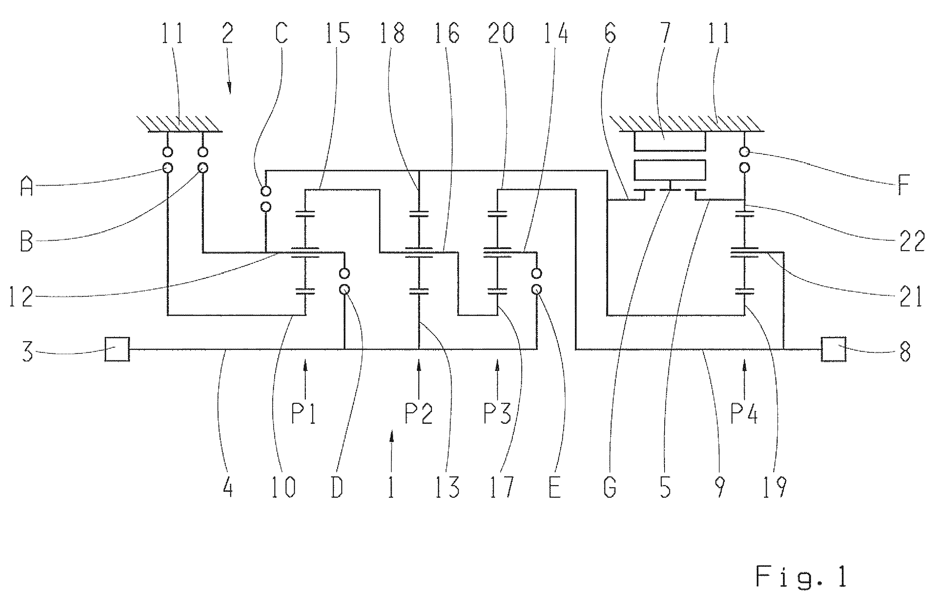

In Fig. 1 ist ein mit einer Getriebevorrichtung 1 ausgeführter Antriebsstrang 2 eines Fahrzeuges stark schematisiert dargestellt, der neben der Getriebevorrichtung 1 eine vorliegend als Brennkraftmaschine ausgeführte Antriebsmaschine 3 umfasst. Die Antriebsmaschine 3 ist im Bereich einer Welle 4 mit der Getriebevorrichtung 1 wirkverbunden. Des Weiteren ist die Getriebevorrichtung 1 im Bereich von zwei weiteren Wellen 5, 6 mit einer elektrischen Maschine 7 verbindbar, während ein Abtrieb 8 des Fahrzeugantriebsstranges 2 im Bereich einer zusätzlichen Welle 9 mit der Getriebevorrichtung 1 in Wirkverbindung steht.

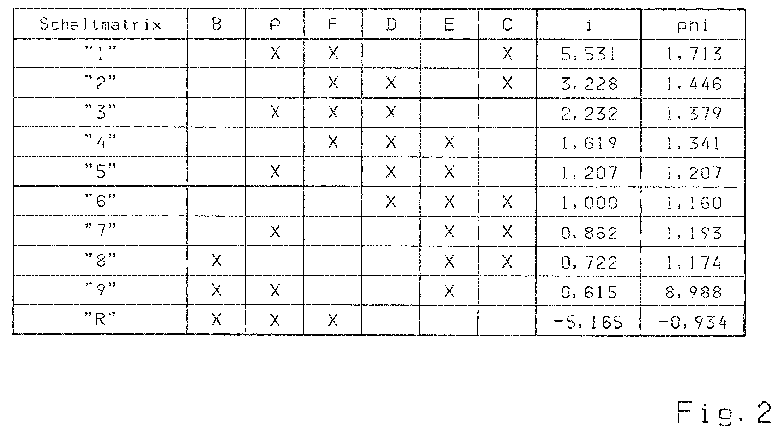

Über die Getriebevorrichtung 1 sind vorliegend neun Übersetzungen "1" bis "9" und eine Übersetzung "R" für Rückwärtsfahrt durch wechselseitiges Schließen oder Öffnen verschiedener Schaltelemente A bis F darstellbar, wobei die jeweils zur Darstellung einer der Übersetzungen "1" bis "R" in geschlossenem Betriebszustand zu haltenden oder zu führenden Schaltelemente A bis F in der in Fig. 2 gezeigten Schaltmatrix jeweils durch den Buchstaben X gekennzeichnet sind, während die weiteren Schaltelemente A bis F jeweils in geöffnetem Betriebszustand zu führen oder zu halten sind. Zusätzlich umfasst die Schaltmatrix gemäß Fig. 2 in der durch den Buchstaben i gekennzeichneten Spalte beispielhafte Zahlenwerte der Übersetzungen "1" bis "R" sowie in der letzten Spalte Zahlenwerte des Stufensprunges phi.

Die elektrische Maschine 7 ist vorliegend über ein formschlüssiges Doppelschaltelement G entweder mit der weiteren Welle 5, mit der weiteren Welle 6 oder mit keiner der beiden Wellen verbindbar, um in der Getriebevorrichtung 1 wenigstens annähernd zugkraftunterbrechungsfreie Übersetzungswechsel durchführen zu können und auch verschiedene Hybridfunktionen, wie einen Boost-Betrieb, einen Rekuperations-Betrieb, eine Verschiebung eines Betriebspunktes der Antriebsmaschine 3, einen rein elektrischen Fahrbetrieb eines mit dem Fahrzeugantriebsstrang 2 ausgeführten Fahrzeuges, einen Startvorgang der Antriebsmaschine 3 über die elektrische Maschine 7 sowie einen Ladevorgang eines der elektrischen Maschine 7 zugeordneten elektrischen Speichers, durchführen zu können.

Dabei ist ein Boosten, ein Rekuperieren oder eine Betriebspunktverschiebung dann möglich, wenn in der Getriebevorrichtung 1 eine der Übersetzungen "1" bis "R" fest eingelegt ist. Zur Darstellung eines rein elektrischen Fahrbetriebes, während dem eine Drehzahl der Welle 4 im Wesentlichen gleich Null ist, ist die elektrische Maschine 7 über das Doppelschaltelement G mit der weiteren Welle 6 zu verbinden und gleichzeitig das als Bremse ausgeführte formschlüssige Schaltelement F zu schließen. Alternativ hierzu ist ein rein elektrischer Fahrbetrieb bei gleichzeitig stehender Welle 4 durch Koppeln der elektrischen Maschine 7 mit der weiteren Welle 5 über das Doppelschaltelement G möglich, wenn das ebenfalls als Bremse ausgeführte formschlüssige Schaltelement B und gleichzeitig das als formschlüssige Kupplung ausgeführte Schaltelement C geschlossen sind.

Der vorgenannte Startvorgang der Antriebsmaschine 3 und auch der Ladevorgang des der elektrischen Maschine 7 zugeordneten elektrischen Speichers ist nur dann möglich, wenn die elektrische Maschine 7 über das Doppelschaltelement G mit der weiteren Welle 6 verbunden ist und gleichzeitig das Schaltelement C und das Schaltelement D geschlossen sind, da zur Darstellung dieser Betriebszustände die Antriebsmaschine 3 direkt mit der elektrischen Maschine 7 zu koppeln ist.

Soll ein mit dem Fahrzeugantriebsstrang 2 ausgeführtes Fahrzeug über die Antriebsmaschine 3 aus einem Fahrzeugstillstand möglichst verschleißfrei und dabei mit geringen Verlustleistungen angefahren werden, ist die elektrische Maschine 7 als elektrodynamisches Anfahrelement zu betreiben und hierfür über das Doppelschaltelement G mit der weiteren Welle 5 zu verbinden. Wird der Anfahrvorgang in der ersten Übersetzung "1" für Vorwärtsfahrt durchgeführt, sind zunächst nur die Schaltelemente A und C geschlossen und das Schaltelement F wird in geöffnetem Betriebszustand gehalten. Für den Anfahrvorgang wird die Drehzahl der Antriebsmaschine 3 durch einen entsprechenden Betrieb der elektrischen Maschine 7 ausgeglichen, womit die Drehzahl der zusätzlichen Welle 9 und damit auch des Abtriebs 8 zunächst im Wesentlichen gleich Null ist. Um die Drehzahl des Abtriebs 8 anheben zu können, ist das Abtriebsmoment im Bereich der elektrischen Maschine 7 abzustützen. Anschließend wird die Drehzahl der weiteren Welle 5 über die elektrische Maschine 7 in Richtung Null geführt und das ebenfalls als Bremse ausgeführte formschlüssige Schaltelement F bei Erreichen eines für die Zuschaltung des Schaltelementes F geeigneten Differenzdrehzahlfensters bei geringen Belastungen geschlossen, womit die erste Übersetzung "1" für Vorwärtsfahrt letztendlich in der Getriebevorrichtung 1 eingelegt ist.

Die als Planetenkoppelgetriebe ausgebildete Getriebevorrichtung 1 umfasst bei dem in der Zeichnung dargestellten Ausführungsbeispiel vier dreiwellige Planetenradsätze P 1 bis P4, deren Wellen teilweise miteinander verbunden sind und über die Schaltelemente A, B und F drehfest darstellbar oder über die Schaltelemente C, D und E teilweise miteinander drehfest verbindbar sind.

Dabei ist eine als Sonnenrad ausgeführte Welle 10 des ersten Planetenradsatzes P1 über das Schaltelement A mit einem Gehäuse 11 der Getriebevorrichtung 1 verbindbar, während eine einen Planetenträger darstellende zweite Welle 12 des ersten Planetenradsatzes P1 über das Schaltelement D mit der Welle 4 bzw. der Getriebeeingangswelle der Getriebevorrichtung 1 sowie einer ebenfalls als Sonnenrad ausgeführten Welle 13 des zweiten Planetenradsatzes P2 koppelbar ist. Zusätzlich ist der Planetenträger 12 des ersten Planetenradsatzes P1 bei geschlossenem Schaltelement D über das als Kupplung ausgeführte formschlüssige Schaltelement E mit einer als Planetenträger ausgeführten Welle des dritten Planetenradsatzes P3 drehfest verbindbar. Eine als Hohlrad ausgebildete dritte Welle 15 des ersten Planetenradsatzes P1 ist drehfest mit einer einen Planetenträger darstellenden zweiten Welle 16 des zweiten Planetenradsatzes P2 und einer als Sonnenrad ausgeführten zweiten Welle 17 des dritten Planetenradsatzes P3 verbunden.

Der Planetenträger 12 des ersten Planetenradsatzes P1 ist über das Schaltelement C mit der weiteren Welle 6 der Getriebevorrichtung 1 und mit einer damit drehfest verbundenen dritten Welle 18 drehfest verbindbar, wobei die weitere Welle 6 zusätzlich auch drehfest mit einer als Sonnenrad ausgebildeten ersten Welle 19 des vierten Planetenradsatzes P4 in Wirkverbindung steht.

Zusätzlich steht eine als Hohlrad ausgeführte dritte Welle 20 des dritten Planetenradsatzes P3 ebenso wie eine zweite Welle 21 des vierten Planetenradsatzes P4, die einen Planetenträger darstellt, mit der zusätzlichen Welle bzw. der Getriebeausgangswelle 9 der Getriebevorrichtung 1 drehfest in Wirkverbindung. Eine dritte als Hohlrad ausgebildete Welle 22 des vierten Planetenradsatzes P4 ist mit der weiteren Welle 5 der Getriebevorrichtung 1 drehfest verbunden und über das Schaltelement F gemeinsam mit der weiteren Welle 5 drehfest mit dem Gehäuse 11 verbindbar.

Da das formschlüssige Schaltelement F zur Darstellung der ersten vier Übersetzungen "1" bis "4" für Vorwärtsfahrt in geschlossenem Betriebszustand gehalten wird, sind wenigstens annähernd zugkraftunterbrechungsfreie abtriebsgestützte Schaltungen zwischen den Übersetzungen "1" bis "4" bei drehfest verbundener elektrischer Maschine 7 mit der weiteren Welle 6 über einen rein elektromotorischen Zugkrafterhalt durch die elektrische Maschine 7 darstellbar. Dies resultiert aus der Tatsache, dass die elektrische Maschine 7 in gekoppeltem Zustand mit der weiteren Welle 6 und gleichzeitig geschlossenem Schaltelement F über eine feste Übersetzung mit dem Abtrieb 8 bzw. der zusätzlichen Welle 9 verbunden ist. Dabei sind bei einer entsprechenden Anforderung auch Übersetzungsstufen überspringbar und beispielsweise ein Übersetzungswechsel von der ersten Übersetzung "1" direkt in die dritte Übersetzungsstufe "3" oder die vierte Übersetzungsstufe "4" oder auch Rückschaltungen wenigstens annähernd zugkraftunterbrechungsfrei durchführbar. Eine Drehzahl n6 der über das Doppelschaltelement G drehfest mit der elektrischen Maschine 7 verbundenen weiteren Welle 6 entspricht einem Produkt aus der Übersetzung zwischen der elektrischen Maschine 7 bzw. der weiteren Welle 6 und der zusätzlichen Welle 9 bzw. der Getriebeausgangswelle und der Drehzahl n9 der Getriebeausgangswelle 9.

Bei Vorliegen einer entsprechenden Anforderung für einen Übersetzungswechsel innerhalb des ersten die Übersetzungen "1" bis "4" umfassenden Übersetzungsbereiches ist durch einen entsprechenden Betrieb der elektrischen Maschine 7 zunächst ein Lastübergang von der zugeschalteten Antriebsmaschine 3 in Richtung der elektrischen Maschine 7 darstellbar, wobei dies immer im Rahmen der Leistungsfähigkeit der elektrischen Maschine 7 durchführbar ist. Bei nicht ausreichender Leistungsfähigkeit der elektrischen Maschine 7 ist der Lastübergang von der Antriebsmaschine 3 in Richtung der elektrischen Maschine 7 durch einen Lastabbau bzw. eine Reduzierung des aktuell von der Antriebsmaschine 3 erzeugten Antriebsmomentes und/oder durch zumindest teilweises Öffnen einer optional vorhandenen und zwischen der Welle 4 und der Antriebsmaschine 3 vorgesehenen optionalen Trennkupplung unterstützbar und die Welle 4 dann anforderungsgemäß im Wesentlichen lastfrei darstellbar. In diesem Betriebszustand der Getriebevorrichtung 1 bzw. des Fahrzeugantriebsstranges 2, ist die aktuell in der Getriebevorrichtung 1 eingelegte Ist-Übersetzung "1" bis "4" im Wesentlichen durch lastfreies Öffnen des Schaltelementes A, des Schaltelementes C, oder des Schaltelementes E auslegbar.

Anschließend wird die Differenzdrehzahl im Bereich des zur Darstellung der angeforderten Ziel-Übersetzung "1" bis "4" zuzuschaltenden Schaltelementes D, A, E oder C über eine Regelung der Drehzahl der Antriebsmaschine 3 abgebaut und das Schaltelement D, A, E oder C im wenigstens annähernd synchronen Betriebszustand zugeschaltet. Dabei ist die Regelung der Drehzahl der Antriebsmaschine 3 zur Einstellung der Synchrondrehzahl der Ziel-Übersetzung in der Getriebevorrichtung 1 eventuell in Verbindung mit einer optional vorhandenen zweiten elektrischen Maschine, die einen Starter-Generator darstellt, oder eine optionale Trennkupplung zwischen der Getriebeeingangswelle 4 und der Antriebsmaschine 3 herstellbar. Abschließend wird in Abhängigkeit der jeweils vorliegenden Betriebsstrategie noch ein entsprechender Lastübergang von der elektrischen Maschine 7 hin zur Antriebsmaschine 3 teilweise oder vollständig durchgeführt, womit der wenigstens annähernd zugkraftunterbrechungsfreie Übersetzungswechsel in gewünschtem Umfang durchgeführt und abgeschlossen ist.

Liegt jeweils eine Anforderung für einen Übersetzungswechsel innerhalb eines die Übersetzungen "4" bis "9" für Vorwärtsfahrt umfassenden zweiten Übersetzungsbereiches vor und ist die elektrische Maschine 7 über das Doppelschaltelement G mit der weiteren Welle 5 verbunden sowie das Schaltelement E geschlossen, das zur Darstellung der Übersetzungen "4" bis "9" immer geschlossen ist, sind die weitere Welle 6, die Getriebeeingangswelle 4 und die Getriebeausgangswelle 9 derart miteinander wirkverbunden, dass eine Drehzahl n6 der weiteren Welle 6 gleich der Summe aus dem Produkt einer ersten Variablen V1 und einer Drehzahl n4 der Getriebeeingangswelle 4 und dem Produkt aus einer zweiten Variablen V2 und einer Drehzahl der Getriebeausgangswelle 9 entspricht. Die erste Variable V1 ist gleich einem negativen Quotienten aus dem von der elektrischen Maschine 7 eingeleiteten Drehmoment und einem von der Verbrennungsmaschine 3 eingeleiteten Drehmoment. Die zweite Variable entspricht einem Produkt aus der Übersetzung zwischen der Getriebeeingangswelle 4 und der Getriebeausgangswelle 9 und der ersten Variablen V1.

Die Drehzahlen der Antriebsmaschine 3 und der elektrischen Maschine 7 sowie die Drehzahl des Abtriebs 8 sind während Lastschaltungen bzw. wenigstens annähernd zugkraftunterbrechungsfreien Übersetzungswechseln zwischen den Übersetzungen "4" bis "9", die EDA-Schaltungen darstellen, jeweils variabel, während die Verhältnisse der Drehmomente jedoch fix sind, wobei die Faktoren der Drehzahlen auch die Faktoren der Drehmomente, sind, wenn man Wirkungsgrade im Bereich der Getriebevorrichtung 1 vernachlässigt.

Die Tatsache, dass das formschlüssige Schaltelement E zur Darstellung der Übersetzungen "4" bis "9" immer geschlossen ist, ermöglicht, dass alle Übersetzungswechsel zwischen den Übersetzungen "4" bis "9" lastschaltbar sind und Übersetzungen bei Übersetzungswechseln innerhalb des zweiten Übersetzungsbereiches auch übersprungen werden können.

Während der Durchführung eines angeforderten Übersetzungswechsels innerhalb des zweiten Übersetzungsbereiches ist bei noch in der Getriebevorrichtung 1 eingelegter Ist-Übersetzung zunächst das im Fahrzeugantriebsstrang 2 geführte Drehmoment im Bereich der elektrischen Maschine 7 entsprechend dem Verhältnis zwischen dem Drehmoment der Antriebsmaschine 3 und dem Drehmoment der elektrischen Maschine 7 im Bereich der elektrischen Maschine 7 abzustützen. Dies führt dazu, dass das jeweils auszulegende Schaltelement F, A, D oder C in einen lastfreien Betriebszustand überführt wird, denn das Drehmoment wird dann alleine über das Schaltelement E geführt.

Im Fall, dass die Leistungsfähigkeit der elektrischen Maschine 7 für ein vollständiges Abstützen der Last nicht ausreichend ist, ist das jeweils auszulegende Schaltelement durch Absenken des Drehmomentes der Antriebsmaschine 3 in einen wenigstens annähernd lastfreien Zustand, zu dem das abzuschaltende Schaltelement in gewünschtem Umfang geöffnet werden kann, zu überführen. Anschließend wird die Ist-Übersetzung in der Getriebevorrichtung 1 ausgelegt und das jeweils zuzuschaltende Schaltelement durch eine Regelung der Drehzahl der elektrischen Maschine 7 und der Drehzahl der Antriebsmaschine 3 unter Last synchronisiert. In wenigstens annähernd synchronem Betriebszustand des zuzuschaltenden Schaltelementes wird dieses in seinen geschlossenen Betriebszustand überführt und dadurch die Ziel-Übersetzung in der Getriebevorrichtung 1 eingelegt, wobei in Abhängigkeit der jeweils vorliegenden Betriebsstrategie ein Lastabbau im Bereich der elektrischen Maschine 7 teilweise oder vollständig durchgeführt wird, um den Übersetzungswechsel im gewünschten Umfang abzuschließen.

Ist die elektrische Maschine 7 über das Doppelschaltelement G mit der weiteren Welle 5 wirkverbunden und liegt jeweils eine entsprechende Anforderung für einen Übersetzungswechsel innerhalb des zweiten Übersetzungsbereiches vor, ist die Drehzahl der weiteren Welle 5 gemäß dem vorstehend näher beschriebenen formelmäßigen Zusammenhang zur Berechnung der Drehzahl der weiteren Welle 6 bestimmbar, wobei die Variable V1 und die Variable V2 dann aufgrund der veränderten Übersetzungsverhältnisse im Bereich der Getriebevorrichtung 1 jeweils andere Werte annehmen. Ansonsten entspricht die Vorgehensweise während einer EDA-Schaltung innerhalb des zweiten Übersetzungsbereiches der Getriebevorrichtung 1 bei mit der weiteren Welle 5 verbundener elektrischer Maschine 7 der Vorgehensweise, die bei mit der weiteren Welle 6 verbundener elektrischer Maschine 7 anzuwenden ist.

Liegt eine Anforderung für einen Übersetzungswechsel in Form einer Hoch- oder Rückschaltung zwischen den Übersetzungen "3" und "5" vor, bleiben die Schaltelemente A und D während des Übersetzungswechsels jeweils geschlossen, weshalb die Kopplung zwischen der Getriebeeingangswelle 4, der weiteren Welle 5 und der Getriebeausgangswelle 9 alleine durch die Schaltelemente A und D besteht und die Drehzahl n5 der weiteren Welle 5 wiederum der Summe aus dem Produkt der ersten Variablen V1 und der Drehzahl der Getriebeeingangswelle 4 und dem Produkt der zweiten Variablen V2 und der Drehzahl n9 der Getriebeausgangswelle entspricht. Die Drehzahlen der Antriebsmaschine 2, der elektrischen Maschine 7 und des Abtriebs 8 sind wiederum variabel, während die Verhältnisse der Drehmomente der Antriebsmaschine 3, der elektrischen Maschine 7 und des Abtriebs 8 fix sind. Die Drehzahlen der elektrischen Maschine 7 vor und nach dem Übersetzungswechsel sind im Drehzahlplan bei der weiteren Welle 5 abzulesen.

Das Schaltverfahren des Übersetzungswechsels zwischen der dritten Übersetzung "3" und der fünften Übersetzung "5" für Vorwärtsfahrt entspricht wiederum dem Schaltverfahren während eines Übersetzungswechsels innerhalb des zweiten Übersetzungsbereiches, weshalb hierzu auf die entsprechende vorstehende Beschreibung verwiesen wird.

Liegt eine Anforderung für eine Hoch- oder Rückschaltung zwischen den Übersetzungen "2" und "6" vor und ist die elektrische Maschine 7 über das Doppelschaltelement G mit der weiteren Welle 5 verbunden, bleiben das Schaltelement C und das Schaltelement D geschlossen. Durch die beiden geschlossenen Schaltelemente C und D besteht wiederum eine Kopplung zwischen der Getriebeeingangswelle 4, der weiteren Welle 5 und der Getriebeausgangswelle 9 gemäß dem folgenden formelmäßigen Zusammenhang:

$$n5 = V1 \times n4 + V1 \times n9$$

Die Drehzahlen der Antriebsmaschine 3, der elektrischen Maschine 7 und des Abtriebs 8 sind wiederum während des Übersetzungswechsels variabel, während die Verhältnisse der Drehmomente im Bereich der Antriebsmaschine 3, der elektrischen Maschine 7 und des Abtriebs 8 fix sind. Die Drehzahlen der elektrischen Maschine 7 vor und nach der Schaltung sind wiederum im Drehzahlplan bei der weiteren Welle 5 ablesbar.

Auch das Schaltverfahren während eines Übersetzungswechsels zwischen der zweiten Übersetzung "2" und der sechsten Übersetzung "6" entspricht im Wesentlichen wiederum dem Schaltverfahren während eines Übersetzungswechsels innerhalb des zweiten Übersetzungsbereiches, weshalb auch an dieser Stelle auf die vorstehende Beschreibung verwiesen wird.

Ist die elektrische Maschine 7 über das Doppelschaltelement G mit der weiteren Welle 5 verbunden und liegt eine entsprechende Anforderung für eine Hoch- oder Rückschaltung zwischen den Übersetzungen "1" und "7" vor, bleiben die Schaltelemente C und A während des Übersetzungswechsels geschlossen. Durch die beiden geschlossenen Schaltelemente C und A besteht wiederum eine Kopplung zwischen den Wellen 4, 5 und 9 gemäß dem vorstehend aufgeführten formelmäßige Zusammenhang. Die Drehzahlen der Antriebsmaschine 3, der elektrischen Maschine 7 und des Abtriebs 8 sind während der Schaltung wiederum variabel einstellbar, während die Verhältnisse zwischen den Drehmomenten der Antriebsmaschine 3, der elektrischen Maschine 7 und des Abtriebs 8 fix sind. Die Drehzahlen der elektrischen Maschine 7 vor und nach der Schaltung sind wiederum im Drehzahlplan bei der weiteren Welle 5 ablesbar. Zusätzlich entspricht das Schaltverfahren während des Übersetzungswechsels zwischen den Übersetzungen "1" und "7" dem während eines Übersetzungswechsels innerhalb des zweiten Übersetzungsbereiches der Getriebevorrichtung 1 beschriebenen Schaltverfahren.

Bei dem in der Zeichnung dargestellten Ausführungsbeispiel der Getriebevorrichtung 1 sind Übersetzungswechsel innerhalb des ersten Übersetzungsbereiches bzw. Lastschaltungen zwischen den Übersetzungen "1" bis "4" im Wesentlichen zugkraftunterbrechungsfrei darstellbar, wenn die elektrische Maschine 7 mit der weiteren Welle 6 gekoppelt ist. Schaltungen im ersten Übersetzungsbereich der Getriebevorrichtung 1 sind rein elektromotorisch abstützbar. Bei der Durchführung eines Übersetzungswechsels in der Getriebevorrichtung 1 im zweiten Übersetzungsbereich kann die elektrische Maschine 7 über das Doppelschaltelement G sowohl mit der weiteren Welle 6 als auch mit der weiteren Welle 5 wirkverbunden sein. Diese Schaltungen stellen so genannte EDA-Schaltungen dar, während welchen am Abtrieb 8 ein Drehmoment der Antriebsmaschine 3 und ein Drehmoment der elektrischen Maschine anliegt.

Direktschaltungen zwischen den Übersetzungen "5" und "3", "6" und "2" sowie "7" und "1" sind nur bei mit der weiteren Welle 5 verbundener elektrischer Maschine 7 möglich, wobei diese Schaltungen ebenfalls wiederum EDA-Schaltungen darstellen.

Ist die Ankopplung der elektrischen Maschine 7 bei Vorliegen einer entsprechenden Schaltung zwischen den beiden weiteren Wellen 5 und 6 zu wechseln, ist zunächst eine Lastumverteilung zwischen der elektrischen Maschine 7 und der Antriebsmaschine 3, d. h. ausgehend von der elektrischen Maschine 7 in Richtung der Antriebsmaschine 3, durchzuführen, um das Doppelschaltelement G in lastfreiem Betriebszustand zu öffnen und die Wirkverbindung zwischen der weiteren Welle 5 oder der weiteren Welle 6 und der elektrischen Maschine 7 zunächst zu unterbrechen. Anschließend wird das Doppelschaltelement G durch Regelung der Drehzahl der elektrischen Maschine 7 in einen wenigstens annähernd synchronen Betriebszustand überführt und die gewünschte Wirkverbindung zwischen der elektrischen Maschine 7 und der weiteren Welle 5 oder der weiteren Welle 6 hergestellt und das Doppelschaltelement G in geschlossenen Betriebszustand überführt. Anschließend wird eine gewünschte Lastverteilung zwischen der elektrischen Maschine 7 und der Antriebsmaschine 3 gemäß einer entsprechenden Betriebsstrategie eingestellt.

Der Wechsel der Anbindung zwischen der elektrischen Maschine 7 und der weiteren Welle 5 bzw. der weiteren Welle 6 erfolgt innerhalb des ersten Übersetzungsbereiches der Getriebevorrichtung 1, da eine Kopplung der elektrischen Maschine 7 an die weitere Welle 5 innerhalb des ersten Übersetzungsbereiches eine Drehzahl der elektrischen Maschine 7 gleich Null zur Folge hätte. Zusätzlich ist die elektrische Maschine 7 innerhalb des zweiten Übersetzungsbereiches der Getriebevorrichtung 1 bzw. ab der fünften Übersetzung "5" mit der weiteren Welle 5 zu koppeln, um Direktschaltungen zu ermöglichen und ein Stillstehen der elektrischen Maschine 7 zu vermeiden, was beispielsweise bei einer Kopplung der elektrischen Maschine 7 an die weitere Welle 6 und gleichzeitig in der Getriebevorrichtung 1 eingelegter Übersetzung "8" für Vorwärtsfahrt auftreten würde. Das bedeutet, dass bei eingelegter achter Übersetzung "8" für Vorwärtsfahrt ein Boost-Betrieb, ein Rekuperations-Betrieb sowie eine Verschiebung des Betriebspunktes der Antriebsmaschine 3 nicht möglich sind. Des Weiteren sind bei einer Anbindung der elektrischen Maschine 7 an die weitere Welle 6 keine Direktschaltungen zwischen den Übersetzungen "5" und "3", "6" und "2" sowie "7" und "1" möglich.

Damit bietet eine Umschaltung der Wirkverbindung zwischen der elektrischen Maschine 7 und der weiteren Welle 5 sowie der weiteren Welle 6 vorteilhafterweise die Möglichkeit, dass die elektrische Maschine 7 auch bei in der Getriebevorrichtung 1 eingelegter achter Übersetzung "8" eine Drehzahl ungleich Null aufweist und Direktschaltungen zwischen den vorgenannten Übersetzungen in der Getriebevorrichtung 1 möglich sind. Zusätzlich ist die elektrische Maschine 7 über das Doppelschaltelement G vollständig vom Kraftfluss des Fahrzeugantriebsstranges 2 abkoppelbar und über die Umschaltbarkeit der elektrischen Maschine 7 zwischen den weiteren Wellen 5 und 6 auch eine zweite Übersetzung für einen rein elektromotorischen Fahrbetrieb eines mit dem Fahrzeugantriebsstrang 2 ausgeführten Fahrzeuges darstellbar. Damit ist ein Anfahrvorgang des Fahrzeugantriebsstranges 2 mittels der als elektrodynamisches Anfahrelement betriebenen elektrischen Maschine 7 mit Teillast möglich.

Generell weist die erfindungsgemäße Getriebevorrichtung einen Aufbau wie ein Automatgetriebe mit vorzugsweise mehreren Planetenradsätzen und mehreren Schaltelementen auf, wobei Wellen der Getriebevorrichtung über die Schaltelemente miteinander oder mit dem Gehäuse betriebszustandsabhängig verbindbar sind. Übersetzungen der Getriebevorrichtung werden dadurch dargestellt, dass jeweils bestimmte Schaltelemente zugeschaltet und weitere Schaltelemente abgeschaltet sind. Während eines Übersetzungswechsels bleiben jeweils ein oder mehrere Schaltelemente zugeschaltet, während jeweils zumindest ein Schaltelement abgeschaltet und zumindest ein weiteres Schaltelement zugeschaltet wird. Die elektrische Maschine ist zumindest im Bereich einer Welle der Getriebevorrichtung an diese angebunden.

Während eines Übersetzungswechsels ist die elektrische Maschine über die damit wirkverbundene Welle und über die während des Übersetzungswechsels in zugeschaltetem Betriebszustand verbleibenden Schaltelemente über ein festes Drehzahlverhältnis mit der Getriebeausgangswelle verbunden. Alternativ hierzu sind die elektrische Maschine, die Antriebsmaschine und die Getriebeausgangswelle über die mit der elektrischen Maschine 7 wirkverbundene Welle über eine definierte Drehzahlbeziehung miteinander gekoppelt, so dass eine Lastschaltung mit Hilfe des im Bereich der elektrischen Maschine 7 zur Verfügung stellbaren Drehmomentes während eines motorischen oder eines generatorischen Betriebes ermöglicht wird. Dabei wird während des Betriebszustandes der Getriebevorrichtung, während dem die elektrische Maschine, die Antriebsmaschine und die Getriebeausgangswelle über eine definierte Drehzahlbeziehung miteinander gekoppelt sind, im Bereich eines oder mehrerer Planetenradsätze eine Drehzahlüberlagerung realisiert.

Im Bereich der erfindungsgemäßen Getriebevorrichtung treten besonders dann geringe Verlustleistungen auf, wenn die Schaltelemente der Getriebevorrichtung als formschlüssige Schaltelemente ausgeführt sind.

Die elektrische Maschine ist im Bereich einer Welle der Getriebevorrichtung anbindbar, um einen Startvorgang der als Brennkraftmaschine ausgeführten Antriebsmaschine in einem Neutralbetriebszustand der Getriebevorrichtung, zu dem der Kraftfluss zwischen der Getriebeeingangswelle und der Getriebeausgangswelle unterbrochen ist, durchführen zu können und gleichzeitig einen Ladevorgang einer mit der elektrischen Maschine wirkverbundenen elektrischen Speichereinrichtung realisieren zu können. Zusätzlich ist die elektrische Maschine über eine Welle derart mit der Getriebevorrichtung verbunden, dass ein verlustleistungsarmes Anfahren des mit der Getriebevorrichtung ausgeführten Fahrzeuges über die dann als elektrodynamisches Anfahrelement betriebene elektrische Maschine bei eingelegter Übersetzung für Vorwärtsfahrt möglich ist, wobei hierfür Schaltelemente der Getriebevorrichtung gleichzeitig zugeschaltet werden, über die ansonsten keine Übersetzungen in der Getriebevorrichtung eingelegt werden.

Zusätzlich ist die elektrische Maschine im Bereich einer Welle derart an die Getriebevorrichtung angebunden, dass ein rein elektrisches Fahren unabhängig von der Drehzahl der Getriebeeingangswelle und somit von der Drehzahl der Antriebsmaschine möglich ist, wobei dieser Betriebszustand der Getriebevorrichtung wiederum durch gleichzeitiges Zuschalten von Schaltelementen realisiert wird, über die ansonsten keine Übersetzung in der Getriebevorrichtung eingelegt wird.

Um einen komfortablen Start der Antriebsmaschine während eines rein elektromotorischen Fahrbetriebes über die mit der Getriebevorrichtung gekoppelte elektrische Maschine realisieren zu können, besteht die Möglichkeit, im Bereich der Getriebeeingangswelle eine weitere elektrische Maschine in Form eines Starter-Generators vorzusehen, wobei über den Starter-Generator auch eine Bordnetzversorgung während eines Stop-and-Go-Fahrbetriebes erfolgen kann.

Ist die erfindungsgemäße Getriebevorrichtung mit rein formschlüssigen Schaltelementen ausgeführt, besteht bei einer Notbremsung eines mit dem Fahrzeugantriebsstrang ausgeführten Fahrzeuges die Möglichkeit, dass die als Brennkraftmaschine ausgeführte Antriebsmaschine abgewürgt wird. Dies ist auf einfache Art und Weise durch Anordnung einer Reib-Trennkupplung im Bereich zwischen der Getriebeeingangswelle und der Antriebsmaschine vermeidbar. Zusätzlich ist ein mit der erfindungsgemäßen Getriebevorrichtung ausgeführtes Fahrzeug beim Ausfall der elektrischen Maschine über eine solche Reib-Trennkupplung in an sich bekannter Art und Weise betreibbar und auch anfahrbar.

Bezugszeichen

| 1 | Getriebevorrichtung |
|---|---|
| 2 | Fahrzeugantriebsstrang |
| 3 | Antriebsmaschine |
| 4 | Welle |
| 5 | weitere Welle |
| 6 | weitere Welle |
| 7 | elektrische Maschine |
| 8 | Abtrieb |
| 9 | zusätzliche Welle |
| 10 | Welle des ersten Planetenradsatzes |
| 11 | Gehäuse |
| 12 | Welle des ersten Planetenradsatzes |
| 13 | Welle des zweiten Planetenradsatzes |
| 14 | Welle des dritten Planetenradsatzes |
| 15 | Welle des ersten Planetenradsatzes |
| 16 | Welle des zweiten Planetenradsatzes |
| 17 | Welle des dritten Planetenradsatzes |
| 18 | Welle des zweiten Planetenradsatzes |
| 19 | Welle des vierten Planetenradsatzes |
| 20 | Welle des dritten Planetenradsatzes |
| 21 | Welle des vierten Planetenradsatzes |
| 22 | Welle des vierten Planetenradsatzes |
| A bis G | Schaltelement |
| i | Übersetzung |
| n | Drehzahl |
| phi | Stufensprung |
| P1 bis P4 | Planetenradsatz |
| V1 | erste Variable |
| V2 | zweite Variable |

"1" bis "9"     Übersetzung für Vorwärtsfahrt
"R"             Übersetzung für Rückwärtsfahrt

**Patentansprüche**

1. Getriebevorrichtung (1) mit mehreren Schaltelementen (A bis G), die zur Darstellung verschiedener Übersetzungen in einen geschlossenen oder einen geöffneten Betriebszustand zu führen sind, wobei eine Antriebsmaschine (3) mit wenigstens einer Welle (4) und eine elektrische Maschine (7) mit wenigstens einer weiteren Welle (5, 6) koppelbar ist, während ein Abtrieb (8) mit einer zusätzlichen Welle (9) in Wirkverbindung bringbar ist, wobei die Welle (4), die wenigstens eine weitere Welle (5) und die zusätzliche Welle (9) während eines wenigstens annähernd zugkraftunterbrechungsfreien Übersetzungswechsels ausgehend von einer aktuell eingelegten Ist-Übersetzung ("1" bis "R") in Richtung einer angeforderten Ziel-Übersetzung ("1" bis "R") durch die am Übersetzungswechsel beteiligten Schaltelemente (A bis G) derart miteinander in Wirkverbindung stehen, dass die Drehzahl (n5, n6) der wenigstens einen mit der elektrischen Maschine (7) verbindbaren weiteren Welle (5, 6) bei Anliegen nur eines Drehmomentes der elektrischen Maschine (7) an der zusätzlichen Welle (9) einem Produkt aus der Übersetzung zwischen der weiteren Welle (5, 6) und der zusätzlichen Welle (9) und der Drehzahl (n9) der zusätzlichen Welle (9) und bei Anliegen eines Drehmomentes der Antriebsmaschine (3) und eines Drehmomentes der elektrischen Maschine (7) an der zusätzlichen Welle (9) einer Summe aus dem Produkt der Drehzahl (n4) der Welle (4) und einer ersten Variablen (V1), die gleich einem negativen Quotienten aus dem von der elektrischen Maschine (7) eingeleiteten Drehmoment und einem von der Antriebsmaschine (3) eingeleiteten Drehmoment ist, und dem Produkt aus der Drehzahl (n9) der zusätzlichen Welle (9) und einer zweiten Variablen (V1) entspricht, die gleich einem Produkt aus der Übersetzung zwischen der Welle (4) und der zusätzlichen Welle (9) und der ersten Variablen (V1) ist.

2. Getriebevorrichtung nach Anspruch 1, **dadurch gekennzeichnet, dass** die Schaltelemente (A bis G) als formschlüssige Schaltelemente ausgebildet sind.

3. Getriebevorrichtung nach Anspruch 1 oder 2, **dadurch gekennzeichnet, dass** zumindest vier wenigstens dreiwellige Planetenradsätze (P1 bis P4) vorgesehen sind, deren Wellen teilweise miteinander verbunden und über die Schaltelemente (A bis G) teilweise drehfest darstellbar und/oder teilweise miteinander drehfest verbindbar sind.

4. Getriebevorrichtung nach Anspruch 3, **dadurch gekennzeichnet, dass** die mit der elektrischen Maschine (7) verbindbare weitere Welle (5, 6) mit einer Welle (22, 18) eines der Planetenradsätze (P4, P2) drehfest gekoppelt ist.

5. Getriebevorrichtung nach Anspruch 3 oder 4, **dadurch gekennzeichnet, dass** die mit der elektrischen Maschine (7) verbindbare weitere Welle (6) mit einer Welle (18) eines der Planetenradsätze (P2) drehfest verbunden und gleichzeitig mit einer Welle (12) eines weiteren Planetenradsatzes (P1) drehfest koppelbar ist.

6. Getriebevorrichtung nach einem der Ansprüche 1 bis 5, **dadurch gekennzeichnet, dass** die elektrische Maschine (7) über eines der Schaltelemente (G) mit einer ersten Welle (5) oder einer zweiten Welle (6) verbindbar ist.

7. Getriebevorrichtung nach einem der Ansprüche 3 bis 6, **dadurch gekennzeichnet, dass** die mit der Antriebsmaschine (3) verbindbare Welle (4) mit einer Welle (13) eines der Planetenradsätze (P2) verbunden ist, der im Bereich einer weiteren Welle (18) mit der mit der elektrischen Maschine (7) koppelbaren weiteren Welle (6) drehfest wirkverbunden ist.

8. Getriebevorrichtung nach einem der Ansprüche 3 bis 7, **dadurch gekennzeichnet, dass** die mit der Antriebsmaschine (3) verbindbare Welle (4) über Schaltelemente (D, E) drehfest mit Wellen (12, 14) weiterer Planetenradsätze (P1, P3) verbindbar ist.

9. Getriebevorrichtung nach einem der Ansprüche 3 bis 8, **dadurch gekennzeichnet, dass** eine Welle (12) eines der Planetenradsätze (P1), die über wenigstens eines der Schaltelemente (D) mit der mit der Antriebsmaschine (3) verbindbaren Welle (4) koppelbar ist, über ein weiteres Schaltelement (C) drehfest mit der weiteren Welle (6) verbindbar ist, die mit der elektrischen Maschine (7) in Wirkverbindung bringbar ist.

10. Getriebevorrichtung nach einem der Ansprüche 3 bis 9 **dadurch gekennzeichnet, dass** eine Welle (12) eines der Planetenradsätze (P1), die über wenigstens eines der Schaltelemente (C) mit der mit der Antriebsmaschine (3) verbindbaren Welle (4) koppelbar ist, über ein weiteres Schaltelement (B) drehfest darstellbar ist

11. Getriebevorrichtung nach einem der Ansprüche 8 bis 10, **dadurch gekennzeichnet, dass** eine weitere Welle (10) des Planetenradsatzes (P1), dessen Welle (12) mit der mit der Antriebsmaschine (3) koppelbaren Welle (4) über ein Schaltelement (C) verbindbar ist, über ein weiteres Schaltelement (A) drehfest darstellbar ist.

12. Getriebevorrichtung nach einem der Ansprüche 8 bis 11, **dadurch gekennzeichnet, dass** eine zusätzliche Welle (15) des Planetenradsatzes (P1), dessen Welle (12) mit der mit der Antriebsmaschine (3) koppelbaren Welle (4) über ein Schaltelement (C) verbindbar ist, mit einer weiteren Welle (16) des Planetenradsatzes (P2) drehfest verbunden ist, der im Bereich einer Welle (18) mit der mit der elektrischen Maschine (7) verbindbaren weiteren Welle (6) in Wirkverbindung steht.

13. Getriebevorrichtung nach Anspruch 12, **dadurch gekennzeichnet, dass** die weitere Welle (16) des Planetenradsatzes (P2), dessen Welle (18) mit der mit der elektrischen Maschine (7) in Wirkverbindung bringbaren weiteren Welle (6) gekoppelt ist, mit einer Welle (17) des Planetenradsatzes (P3) drehfest verbunden ist, der im Bereich einer Welle (14) über eines der Schaltelemente (E) mit der mit der Antriebsmaschine (3) koppelbaren Welle (4) und im Bereich einer weiteren Welle (20) mit der mit dem Abtrieb (8) verbindbaren zusätzlichen Welle (9) in Wirkverbindung steht.

14. Getriebevorrichtung nach einem der Ansprüche 3 bis 13, **dadurch gekennzeichnet, dass** einer der Planetenradsätze (P4), der im Bereich einer Welle (22) mit der elektrischen Maschine (7) in Wirkverbindung bringbar ist und im Bereich einer weiteren Welle (21) mit der mit dem Abtrieb (8) koppelbaren zusätzlichen Welle (9) drehfest verbunden ist.

15. Getriebevorrichtung nach Anspruch 14, **dadurch gekennzeichnet, dass** die mit der elektrischen Maschine (7) koppelbare Welle (22) des Planetenradsatzes (P4), der im Bereich einer Welle (21) drehfest mit der mit dem Abtrieb (8) verbindbaren zusätzlichen Welle (9) verbunden ist, über ein Schaltelement (F) drehfest darstellbar ist.

**Claims**

1. Transmission apparatus (1) having a plurality of shifting elements (A to G) which can be guided into a closed and open operating state in order to produce different transmission ratios, it being possible for a drive unit (3) to be coupled to at least one shaft (4) and an electric machine (7) to be coupled to at least one further shaft (5, 6), while an output (8) can be brought into an operative connection with an additional shaft (9), the shaft (4), the at least one further shaft (5) and the additional shaft (9) being operatively connected to one another during a transmission ratio change which is at least approximately free from an interruption in the tractive force starting from a currently engaged actual transmission ratio ("1" to "R") in the direction of a requested target transmission ratio ("1" to "R") by way of the shifting elements (A to G) which participate in the transmission ratio change, in such a way that the rotational speed (n5, n6) of the at least one further shaft (5, 6) which can be connected to the electric machine (7) corresponds, when only a torque of the electric machine (7) prevails in the additional shaft (9), to a product of the transmission ratio between the further shaft (5, 6) and the additional shaft (9) and the rotational speed (n9) of the additional shaft (9) and, when a torque of the drive unit (3) and a torque of the electric machine (7) prevail on the additional shaft (9), corresponds to a sum of the product of the rotational speed (n4) of the shaft (4) and a first variable (V1) which is equal to a negative quotient of the torque which is introduced by the electric machine (7) and a torque which is introduced by the drive unit (3), and corresponds to the product of the rotational speed (n9) of the additional shaft (9) and a second variable (V1) which is equal to a product of the transmission ratio between the shaft (4) and the additional shaft (9) and the first variable (V1).

2. Transmission apparatus according to Claim 1, **characterized in that** the shifting elements (A to G) are configured as positively locking shifting elements.

3. Transmission apparatus according to Claim 1 or 2, **characterized in that** at least four at least three-shaft planetary gear sets (P1 to P4) are provided, the shafts of which are connected partially to one another and can be provided at least partially fixedly so as to rotate with one another via the shifting elements (A to G) and/or can be partially connected fixedly to one another so as to rotate with one another.

4. Transmission apparatus according to Claim 3, **characterized in that** the further shaft (5, 6) which can be connected to the electric machine (7) is coupled fixedly to a shaft (22, 18) of one of the planetary gear sets (P4, P2) so as to rotate with it.

5. Transmission apparatus according to Claim 3 or 4, **characterized in that** the further shaft (6) which can be connected to the electric machine (7) is connected fixedly to a shaft (18) of one of the planetary gear sets (P2) so as to rotate with it and at the same time can be coupled fixedly to a shaft (12) of a further planetary gear set (P1) so as to rotate with it.

6. Transmission apparatus according to one of Claims 1 to 5, **characterized in that** the electric machine (7) can be connected via one of the shifting elements (G) to a first shaft (5) or a second shaft (6).

**7.** Transmission apparatus according to one of Claims 3 to 6, **characterized in that** the shaft (4) which can be connected to the drive unit (3) is connected to a shaft (13) of one of the planetary gear sets (P2) which is operatively connected in the region of a further shaft (18) to the further shaft (6) which can be coupled to the electric machine (7), the said operative connection being fixed so as to rotate with the said further shaft (6).

**8.** Transmission apparatus according to one of Claims 3 to 7, **characterized in that** the shaft (4) which can be connected to the drive unit (3) can be connected fixedly via shifting elements (D, E) to shafts (12, 14) of further planetary gear sets (P1, P3) so as to rotate with them.

**9.** Transmission apparatus according to one of Claims 3 to 8, **characterized in that** a shaft (12) of one of the planetary gear sets (P1) which can be coupled via at least one of the shifting elements (D) to the shaft (4) which can be connected to the drive unit (3) can be connected fixedly via a further shifting element (C) to the further shaft (6) so as to rotate with it, which further shaft (6) can be brought into an operative connection with the electric machine (7).

**10.** Transmission apparatus according to one of Claims 3 to 9, **characterized in that** a shaft (12) of one of the planetary gear sets (P1) which can be coupled via at least one of the shifting elements (C) to the shaft (4) which can be connected to the drive unit (3) can be provided fixedly in terms of rotation via a further shifting element (B).

**11.** Transmission apparatus according to one of Claims 8 to 10, **characterized in that** a further shaft (10) of the planetary gear set (P1), the shaft (12) of which can be connected via a shifting element (C) to the shaft (4) which can be coupled to the drive unit (3), can be provided fixedly in terms of rotation via a further shifting element (A).

**12.** Transmission apparatus according to one of Claims 8 to 11, **characterized in that** an additional shaft (15) of the planetary gear set (P1), the shaft (12) of which can be connected via a shifting element (C) to the shaft (4) which can be coupled to the drive unit (3), is connected fixedly to a further shaft (16) of the planetary gear set (P2) so as to rotate with it, which planetary gear set (P2) is operatively connected in the region of a shaft (18) to the further shaft (6) which can be connected to the electric machine (7).

**13.** Transmission apparatus according to Claim 12, **characterized in that** the further shaft (16) of the planetary gear set (P2), the shaft (18) of which is coupled to the further shaft (6) which can be brought into an operative connection with the electric machine (7), is connected fixedly to a shaft (17) of the planetary gear set (P3) so as to rotate with it, which planetary gear set (P3) is operatively connected in the region of one shaft (14) via one of the shifting elements (E) to the shaft (4) which can be coupled to the drive unit (3) and is operatively connected in the region of a further shaft (20) to the additional shaft (9) which can be coupled to the output (8).

**14.** Transmission apparatus according to one of Claims 3 to 13, **characterized in that** one of the planetary gear sets (P4) which can be brought into an operative connection with the electric machine (7) in the region of a shaft (22) and is connected, fixedly so as to rotate with it, to the additional shaft (9) which can be coupled to the output (8) in the region of a further shaft (21).

**15.** Transmission apparatus according to Claim 14, **characterized in that** the shaft (22), which can be coupled to the electric machine (7), of the planetary gear set (P4) which is connected, fixedly so as to rotate with it, in the region of a shaft (21) to the additional shaft (9) which can be connected to the output (8) can be provided fixedly in terms of rotation via a shifting element (F).

**Revendications**

**1.** Dispositif de boîte de vitesse (1) comportant plusieurs éléments de changement de rapport (A à G) qui doivent conduire à une représentation de différents rapports de transmission dans un état de fonctionnement fermé ou ouvert, dans lequel une machine d'entraînement (3) peut être accouplée à au moins un arbre (4) et une machine électrique (7) peut être accouplée à au moins un autre arbre (5, 6), pendant qu'une sortie (8) peut être mise en liaison effective avec un arbre supplémentaire (9), dans lequel l'arbre (4), l'au moins un autre arbre (5) et l'arbre supplémentaire (9), pendant un changement de rapport de transmission au moins approximativement sans interruption de la force de traction à partir d'un rapport de transmission effectif actuellement engagé ("1" à "R") dans la direction d'un rapport de transmission cible demandé ("1" à "R") sont en liaison effective les uns avec les autres par l'intermédiaire des éléments de changement de rapport (A à G) participant au changement de rapport de transmission de manière à ce que la vitesse de rotation (n5, n6) de l'au moins un autre arbre (5, 6) pouvant être relié à la machine électrique (7), lorsque seul un couple de rotation de la machine électrique (7) est appliqué à l'arbre supplémentaire (9), corresponde à un produit du rapport de transmission entre l'autre arbre (5, 6) et l'arbre supplémentaire (9) par la vitesse de rotation (n9) de l'arbre supplémentaire (9) et, lors de l'application d'un couple de rotation de la machine d'entraînement (3) et d'un couple de rotation de la machine électrique (7) à l'arbre supplémentaire (9), à ce qu'elle corresponde à une somme du produit de la vitesse de rotation (n4) de l'arbre (4) par une première variable (V1) qui est égale à un quotient négatif entre le couple de rotation produit par la machine électrique (7) et un couple de rotation produit par la machine d'entraînement (3), et du produit de la vitesse de rotation (n9) de l'arbre supplémentaire (9) par une seconde variable (V1) qui est égale à un produit du rapport de transmission entre l'arbre (4) et l'arbre supplémentaire (9) par la première variable (V1).

2. Dispositif de boîte de vitesse selon la revendication 1, **caractérisé en ce que** les éléments de changement de rapport (A à G) sont réalisés sous la forme d'éléments de changement de rapport à complémentarité de forme.

3. Dispositif de boîte de vitesse selon la revendication 1 ou 2, **caractérisé en ce qu'**il est prévu quatre trains planétaires ayant au moins trois arbres (P1 à P4), dont les arbres sont reliés partiellement les uns aux autres et peuvent être représentés partiellement solidaires en rotation et/ou peuvent être partiellement reliés solidaires en rotation les uns aux autres par l'intermédiaire des éléments de changement de rapport (A à G).

4. Dispositif de boîte de vitesse selon la revendication 3, **caractérisé en ce que** l'autre arbre (5, 6) pouvant être relié à la machine électrique (7) est accouplé solidaire en rotation à un arbre (22, 18) de l'un des trains planétaires (P4, P2).

5. Dispositif de boîte de vitesse selon la revendication 3 ou 4, **caractérisé en ce que** l'autre arbre (6) pouvant être relié à la machine électrique (7) est relié solidaire en rotation à un arbre (18) de l'un des trains planétaires (P2) et peut simultanément être accouplé solidaire en rotation à un arbre (12) d'un autre train planétaire (P1).

6. Dispositif de boîte de vitesse selon l'une quelconque des revendications 1 à 5, **caractérisé en ce que** la machine électrique (7) peut être reliée par l'intermédiaire de l'un des éléments de changement de rapport (G) à un premier arbre (5) ou à un second arbre (6).

7. Dispositif de boîte de vitesse selon l'une quelconque des revendications 3 à 6, **caractérisé en ce que** l'arbre (4) pouvant être relié à la machine d'entraînement (3) est relié à un arbre (13) de l'un des trains planétaires (P2) qui est en liaison effective solidaire en rotation, dans la région d'un autre arbre (18), avec l'autre arbre (6) pouvant être accouplé à la machine électrique (7).

8. Dispositif de boîte de vitesse selon l'une quelconque des revendications 3 à 7, **caractérisé en ce que** l'arbre (4) pouvant être relié à la machine d'entraînement (3) peut être relié solidaire en rotation par l'intermédiaire d'éléments de changement de rapport (D, E) à des arbres (12, 14) d'autres trains planétaires (P1, P3).

9. Dispositif de boîte de vitesse selon l'une quelconque des revendications 3 à 8, **caractérisé en ce qu'**un arbre (12) de l'un des trains planétaires (P1), qui peut être accouplé par l'intermédiaire d'au moins l'un des éléments de changement de rapport (D) à l'arbre (4) pouvant être relié à la machine d'entraînement (3), peut être relié solidaire en rotation par l'intermédiaire d'un autre élément de changement de rapport (C) à l'autre arbre (6) qui peut être mis en liaison effective avec la machine électrique (7).

10. Dispositif de boîte de vitesse selon l'une quelconque des revendications 3 à 9, **caractérisé en ce qu'**un arbre (12) de l'un des trains planétaires (P1), qui peut être accouplé par l'intermédiaire d'au moins l'un des éléments de changement de rapport (C) à l'arbre (4) pouvant être relié à la machine d'entraînement (3), peut être représenté solidaire en rotation par l'intermédiaire d'un autre élément de changement de rapport (B).

11. Dispositif de boîte de vitesse selon l'une quelconque des revendications 8 à 10, **caractérisé en ce qu'**un autre arbre (10) du train planétaire (P1), dont l'arbre (12) peut être relié par l'intermédiaire d'un élément de changement de rapport (C) à l'arbre (4) pouvant être accouplé à la machine d'entraînement (3), peut être représenté solidaire en rotation par l'intermédiaire d'un autre élément de changement de rapport (A).

12. Dispositif de boîte de vitesse selon l'une quelconque des revendications 8 à 11, **caractérisé en ce qu'**un arbre supplémentaire (15) du train planétaire (P1), dont l'arbre (12) peut être relié par l'intermédiaire d'un élément de changement de rapport (C) à l'arbre (4) pouvant être accouplé à la machine d'entraînement (3), est relié solidaire en rotation à un autre arbre (16) du train planétaire (P2), qui est en liaison effective dans la région d'un arbre (18) avec l'autre arbre (6) pouvant être relié à la machine électrique (7).

13. Dispositif de boîte de vitesse selon la revendication 12, **caractérisé en ce que** l'autre arbre (16) du train planétaire (P2), dont l'arbre (18) est accouplé à l'autre arbre (6) pouvant être mis en liaison effective avec la machine électrique (7), est relié solidaire en rotation à un arbre (17) du train planétaire (P3), qui est en liaison effective, dans la région d'un arbre (14), par l'intermédiaire de l'un des éléments de changement de rapport (E), avec l'arbre (4) pouvant être accouplé à la machine d'entraînement (3) et est en liaison effective, dans la région d'un autre arbre (20), avec l'arbre supplémentaire (9) pouvant être relié à la sortie (8).

14. Dispositif de boîte de vitesse selon l'une quelconque des revendications 3 à 13, **caractérisé en ce qu'**un des trains planétaires (P4) qui peut être mis en liaison effective, dans la région d'un arbre (22), avec la machine électrique (7) et, dans la région d'un autre arbre (21), est relié solidaire en rotation à l'arbre supplémentaire (9) pouvant être accouplé à la sortie (8).

15. Dispositif de boîte de vitesse selon la revendication 14, **caractérisé en ce que** l'arbre (22) pouvant être accouplé à la machine électrique (7) du train planétaire (P4), qui est relié solidaire en rotation, dans la région d'un arbre (21), à l'arbre supplémentaire (9) pouvant être relié à la sortie (8), peut être représenté solidaire en rotation par l'intermédiaire d'un élément de changement de rapport (F).

Fig. 1

| Schaltmatrix | B | A | F | D | E | C | i | phi |
|---|---|---|---|---|---|---|---|---|
| "1" | | X | X | | | X | 5,531 | 1,713 |
| "2" | | | X | X | | X | 3,228 | 1,446 |
| "3" | | X | X | X | | | 2,232 | 1,379 |
| "4" | | | X | X | X | | 1,619 | 1,341 |
| "5" | | X | | X | X | | 1,207 | 1,207 |
| "6" | | | | X | X | X | 1,000 | 1,160 |
| "7" | | X | | | X | X | 0,862 | 1,193 |
| "8" | X | | | | X | X | 0,722 | 1,174 |
| "9" | X | X | | | X | | 0,615 | 8,988 |
| "R" | X | X | X | | | | −5,165 | −0,934 |

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007005438 A1
- US 20090186735 A1
- EP 2182250 A2